# EUROPEAN PATENT APPLICATION

(11) **EP 1 758 353 A2**
(43) Date of publication of application: **28.02.2007**
(21) Application number: 06119299.3
(22) Date of filing: 22.08.2006
(51) Int. Cl.: H04M 1/60

(54) **Wrist watch-type headset assembly**

(30) Priority: 22.08.2005 KR 20050076598
(71) Applicant: Samsung Electronics Co., Ltd., Suwon-si, Gyeonggi-Do (KR)
(72) Inventor: Lee, Seung-Jai Nr. 508-1104, Dongbu APT, Gyeonggi-do (KR); Son, Suk-Ryun Nr. 105-803, Hansol APT, Seoul (KR); Ko, Jeong-Min Nr. 115-205, Mokdong 1danji APT, Seoul (KR)
(74) Representative: Grünecker, Kinkeldey, Stockmair & Schwanhäusser Anwaltssozietät

(57) **Abstract**

A wrist watch-type headset assembly for wirelessly communicating with a portable terminal is provided. In the wrist watch-type headset assembly, a fixing body of a predetermined shape includes a band to be worn around the wrist of a user, and a headset having a wireless module, such as a Bluetooth module, is detachably installed on the fixing body, for wirelessly communicating with the portable terminal during a call, the wireless module being detached from the fixing body.

## Description

### BACKGROUND OF THE INVENTION

### 1. Field of the Invention

The present invention relates generally to a headset to be worn on the body of a user, for wireless communications with a portable terminal.

### 2. Description of the Related Art

The development of the electronic and communications industry is a driving force behind the proliferation of portable terminals. To meet users' demands, the portable terminals are being developed to have multi-functions, a small size, and be lightweight. Peripheral devices are also being attached or added to the terminals. The peripheral devices can include an attachable or built-in camera, a smart card as an auxiliary memory, an ear microphone installed to a terminal, for communications, and a Bluetooth headset for wirelessly communicating with a terminal by a Bluetooth module provided in the terminal.

Bluetooth-enabled terminals are equipped with a Bluetooth antenna module operating in the 2.4GHz band in addition to a main antenna device for communications. They also have a Bluetooth module in a main board, for wireless short-range communications with a Bluetooth headset.

The Bluetooth headset was designed for hands-free use of the portable terminal. Since there is no need for a cable between the Bluetooth headset and the terminal, the convenience of using the terminal increases, and the Bluetooth headset is simpler to carry than a general hands-free wired ear microphone.

However, since the Bluetooth headset is carried separately from the terminal, it is vulnerable to loss and is likely to be left behind.

### SUMMARY OF THE INVENTION

An object of the present invention is to substantially solve at least the above problems and/or disadvantages and to provide at least the advantages below. Accordingly, an object of the present invention is to provide a wrist watch-type wireless headset assembly, such as a Bluetooth headset, configured to be more portable, thereby considerably decreasing the danger of loss and breakage.

Another object of the present invention is to provide a wrist watch-type wireless headset which can be worn on the wrist of a user with high portability and which can be charged when it is carried.

The above objects are achieved by providing a wrist watch-type wireless headset assembly for wirelessly communicating with a portable terminal. In the wrist watch-type headset assembly, which in one illustrative embodiment represents a Bluetooth headset assembly, a fixing body of a predetermined shape includes a band to be worn around the wrist of a user, and a wireless headset is detachably installed on the fixing body, for wirelessly communicating with the portable terminal during a call, the wireless headset being detached from the fixing body.

### BRIEF DESCRIPTION OF THE DRAWINGS

The above and other objects, features and advantages of the present invention will become more apparent from the following detailed description when taken in conjunction with the accompanying drawings in which:
FIG. 1 is a perspective view of a Bluetooth headset assembly according to an illustrative embodiment of the present invention;
FIG. 2 is a plan view of the Bluetooth headset assembly illustrated in FIG. 1;
FIG. 3 is an exploded perspective view of a Bluetooth headset detached from a fixing body according to the present invention;
FIG. 4 is a rear perspective view of the Bluetooth headset according to the present invention;
FIGs. 5 and 6 illustrate an earphone retracted into and extended from the Bluetooth headset, respectively according to the present invention; and
FIG. 7 is a sectional view of important portions of the Bluetooth headset installed in the fixing body according to the present invention.

### DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

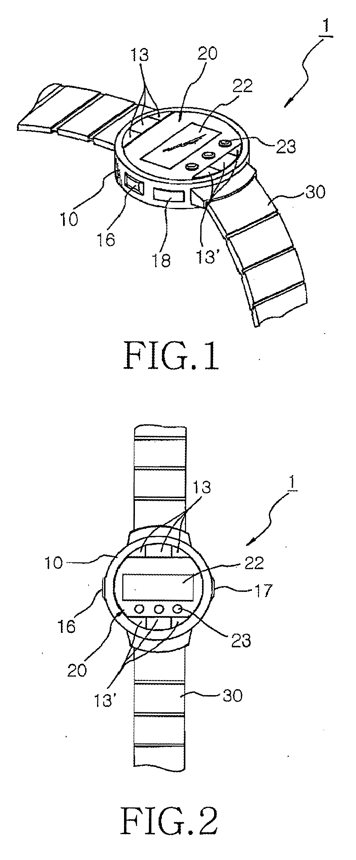

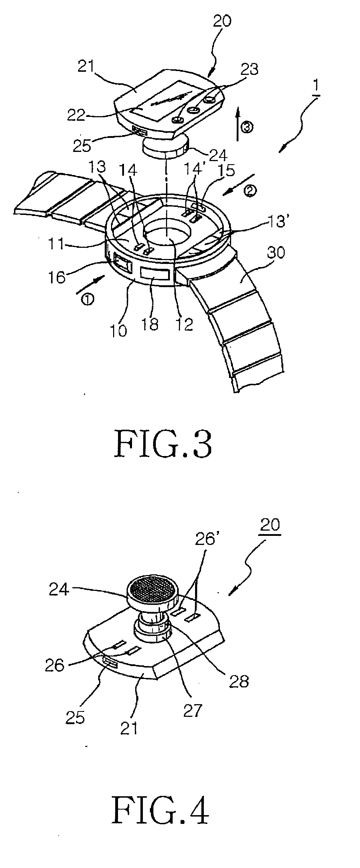

FIG. 1 is a perspective view of a Bluetooth headset assembly 1 according to one embodiment of the present invention, FIG. 2 is a plan view of the Bluetooth headset assembly 1 illustrated in FIG. 1, and FIG. 3 is an exploded perspective view of a Bluetooth headset 20 detached from a fixing body 10 according to the present invention.

Referring to FIGs. 1-3, the Bluetooth headset assembly 1 includes a fixing body 10 with a predetermined wrist watch-type band 30, and a Bluetooth headset 20 mounted on the fixing body 10 such that it can be detached from the fixing body 10.

The band 30 of the fixing body 10 can be worn around the wrist of a user. While the fixing body 10 is shown to be circular, it can be shaped as desired. A plurality of buttons 13 and 13' can protrude outward from a surface of the fixing body 10, and release buttons 16 and 17 can be on the right and left sides of the surface. The release buttons 16 and 17 can function as locking portions to fix and detach the Bluetooth headset 20 in and from the fixing body 10.

The Bluetooth headset 20 is preferably a Bluetooth module which can include a body 21 configured to fit onto a mounting recess 11 of the fixing body 10 and an earphone 24 can extend downward from the body 21 to fit into an ear hole of the user, for a call. In addition, a Liquid Crystal Display (LCD) module 22 can be installed on an upper surface of the body 21 to let the Bluetooth headset assembly 1 serve as a watch by displaying the present time when the Bluetooth headset 20 is mounted on the fixing body 10. A plurality of buttons 23 can be provided in the vicinity of the LCD module 22, for invoking functions including time setting and on/off for a call. While not shown, the Bluetooth headset 20 can have a built-in microphone for sending voice from the user.

The mounting recess 11 can be defined on the fixing body 10 so that the body 21 of the Bluetooth headset 20 can be mounted on the mounting recess 11. Preferably, when the Bluetooth headset 20 is fit on the mounting recess 11, the upper surface of the body 21 is substantially even with that of the fixing body 10, for enhancing the appearance of the Bluetooth headset 20. A mounting groove 12 can be formed lower than the mounting recess 11, for allowing the earphone 24extending from the body 21 to be mounted therein. The function keys 13 and 13' can be provided on the upper surface of the fixing body 10 for use in controlling charging or the operation of the Bluetooth headset 20 when it is installed.

While the Bluetooth headset 20 can be fixed into the fixing body 10 in a known snap-fit structure or in a forced insertion fashion, it is shown fixed by a predetermined locking portion in the present invention, so that it can be kept firmly in the fixing body 10 during excessive motion, such as during exercise, for example. Therefore, lockers 15 can protrude from the inner side surface of the fixing body 10. The lockers 15 can be shaped into hooks and operated by the release buttons 16 and 17 formed on the outer surface of the fixing body 10. In correspondence with the lockers 15, engagement grooves 25 can be formed on a side surface of the body 21 of the Bluetooth headset 20. Hence, when the body 21 is mounted on the mounting recess 11 of the fixing body 10, the hook-shaped lockers 15can be inserted into the engagement grooves 25 such that the Bluetooth headset 20 is not detached from the fixing body 10 until the release buttons 16 and 17 are pressed. Preferably, a pair of locking structures each having a locker 15 and an engagement groove 25 can be provided facing each other and the release buttons 16 and 17 can be installed at positions corresponding to the locking structures, for realizing more stable locking of the Bluetooth headset 20. Thus, when the release buttons 16 and 17 are pressed in the ① and ② directions in FIG. 3, the Bluetooth headset 20 can be detached from the fixing body 10.

The Bluetooth headset 20 can be configured to be automatically or manually chargeable when it is mounted in the fixing body 10 by a power supply included in the fixing body 10 and/or the band 30. Therefore, a plurality of power terminals 14 and 14' can protrude from appropriate positions of the mounting recess 11. The power terminals 14 and 14' can be formed into protruding springs, for not only electrically connecting the Bluetooth headset 20 to the fixing body 10, but also for pushing the Bluetooth headset 20 upward, i.e. in the ③ direction in FIG. 3, in order to facilitate the use of the Bluetooth headset 20 when the release buttons 16 and 17 are pressed. Referring to FIG. 4, terminal portions 26 and 26' can be formed at positions corresponding to the power terminals 14 and 14', and electrically connected to a built-in battery (not shown) of the Bluetooth headset 20.

In accordance with the present invention, in order to reduce the area that the earphone 24 occupies in the fixing body 10, the earphone 24 protruding from the Bluetooth headset 20 can be configured in a retractable structure. When used, the earphone 24 can then extend to a predetermined length from the body 21, and when not used, the earphone 24 can be retracted into a predetermined space 29 within the body 21.

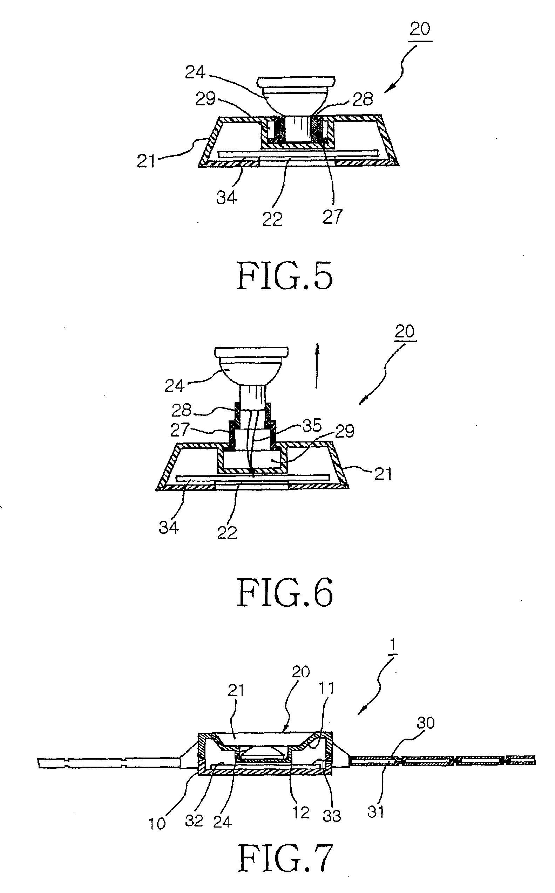

FIGs. 5 and 6 illustrate the earphone 24 retracted into and extended from the Bluetooth headset 20, respectively, according to the present invention. When not used, the earphone 24 can be retracted into the body 21 of the Bluetooth headset 20 installed in the fixing body 10, as illustrated in FIG. 5. When the user uses the earphone 24 for a call, the earphone 24 can be extended to a predetermined length in an arrowed direction so that it can be worn in an ear hole of the user, as illustrated in FIG. 6. Accordingly, the earphone 24 can be configured by use of a plurality of hollow shafts 27 and 28 with different diameters communicating with each other. While not shown, the hollow shafts 27 and 28 may be provided with an extension restricting portion for restricting the extension of the hollow shafts 27 and 28 to a predetermined length. The earphone 24 can be electrically connected to a board 34 within the body 21 by means of a predetermined cable 35 extending through the shafts 27 and 28.

A coin battery or other power source can be used as a power supply for the fixing body 10, and a plate battery cell or other power source can be used as a power supply for the band 30.

FIG. 7 illustrates the Bluetooth headset assembly 1 in which a plurality of battery cells 31 are provided in the band 30, each battery cell 31 being electrically connected to a board 32 with a charging circuit in the fixing body 10 by means of a fine wire cable 33, to which the present invention is not limited. If space permits, a Flexible Printed Circuit (FPC) can substitute for the fine wire cable 33. When battery cells 31 are provided in the band 30, the band 30 is preferably formed of synthetic resin or rubber, and the battery cells 31 are preferably insert-molded into the band 30 so that the band 30 appears normal. Thus, the battery cells 31 or a coin-type charger can be charged with external power applied from a connector terminal 18 in FIG. 1, provided on the outer surface of the fixing body 10 and, in turn, can charge the built-in battery of the Bluetooth headset 20 when the Bluetooth headset 20 is installed in the fixing body 10.

In accordance with the present invention as described above, the Bluetooth headset assembly 1 is of a wrist watch type. It can normally function as a watch and as a headset during a call. Therefore, the danger of loss or breakage encountered with a headset carried in a general manner is avoided. Furthermore, since the Bluetooth headset 20 is chargeable all the time, it can operate for a longer time.

While the invention has been shown and described with reference to a certain preferred embodiment thereof, it will be understood by those skilled in the art that various changes in form and details may be made therein without departing from the scope of the invention as defined by the appended claims.

## Claims

1. A wrist watch-type headset assembly for wirelessly communicating with a portable terminal, the assembly comprising:
a fixing body of a predetermined shape including a band to be worn around a wrist of a user; and
a wireless headset having a wireless module, the headset being detachably installed on the fixing body, for wirelessly communicating with the portable terminal during a call, the wireless headset being detached from the fixing body.

2. The wrist watch-type headset assembly of claim 1, wherein the headset comprises:
a body installed in the fixing body and having a displaying module for displaying time to allow the headset assembly to be used as a watch, when not used for communications;
an earphone protruding downward from the body; and
a microphone built in the body.

3. The wrist watch-type headset assembly of claim 2, wherein the fixing body further comprises:
a mounting recess defined to allow the body of the headset to be mounted therein; and
a mounting groove for inserting the earphone thereinto.

4. The wrist watch-type headset assembly of claim 3, wherein the mounting groove is lower than the mounting recess.

5. The wrist watch-type headset assembly of claim 4, wherein when the body of the wireless headset is mounted onto the mounting recess of the fixing body, the upper surface of the body is substantially even with the upper surface of the fixing body.

6. The wrist watch-type headset assembly of claim 3, wherein the fixing body further comprises:
a locking portion including a locker protruding from an inner side surface of the fixing body, for operating by a release button formed on an outer surface of the fixing body; and
an engagement groove formed on a side surface of the body of the headset in correspondence with the locker, for allowing the locker to be engaged therein.

7. The wrist watch-type headset assembly of claim 1, further comprising, in at least one of the fixing body and the band, a power supply and a charging circuit electrically connected to the power supply, for charging the wireless headset when the wireless headset is installed in the fixing body.

8. The wrist watch-type headset assembly of claim 3, wherein the fixing body further comprises a power terminal protruding from the mounting recess and the wireless headset comprises a terminal portion beneath the body of the wireless headset in correspondence with the power terminal, thereby electrically connecting the body of the wireless headset to the fixing body and charging the wireless headset, when the body of the wireless headset is mounted in the mounting recess of the fixing body.

9. The wrist watch-type headset assembly of claim 8, wherein the power terminal is formed into a protruding spring, for pushing the body of the headset upward when the body is released from a locked state by the release button.

10. The wrist watch-type headset assembly of claim 9, wherein the fixing body further comprises a predetermined interface connector terminal formed on an outer surface thereof, for externally supplying power from a power supply.

11. The wrist watch-type headset assembly of claim 10, wherein the power supply is a coin-type chargeable battery installed on the fixing body.

12. The wrist watch-type headset assembly of claim 10, wherein the power supply is at least one plate-type battery cell built in the band.

13. The wrist watch-type headset assembly of claim 12, wherein the band is formed of one of synthetic resin and rubber and the battery cell is fixed in the band by insert-molding.

14. The wrist watch-type headset assembly of claim 3, wherein the earphone is installed in a retractable structure to be actively inserted into the mounting groove of the fixing body.

15. The wrist watch-type headset assembly of claim 14, wherein the earphone is configured to be extended or retracted by a plurality of shafts with different diameters inserted into the body of the headset.

16. The wrist-type headset assembly of any of claims 1 to 15, wherein said wireless headset is configured to operate according to the Bluetooth standard.

17. A wrist headset assembly for wirelessly communicating with a portable terminal, the assembly comprising:
a fixing body including a band to be worn around a wrist of a user; and
a wireless module headset being installed on the fixing body for wirelessly communicating with the portable terminal.

18. The wrist headset assembly of claim 17, wherein the headset comprises:
a body installed in the fixing body and having a display module for displaying time to allow the headset assembly to be used as a watch,
an earphone protruding downward from the body; and
a microphone built in the body.

19. The wrist headset assembly of claim 17 or 18, wherein said wireless headset module is configured to operate according to the Bluetooth standard.
